(19) Europäisches Patentamt

European Patent Office

Office européen des brevets

(11) **EP 1 254 863 A1**

## (12) EUROPEAN PATENT APPLICATION
published in accordance with Art. 158(3) EPC

(43) Date of publication:
06.11.2002 Bulletin 2002/45

(51) Int Cl.7: **C01G 23/04**, B01D 53/86,
C02F 1/72

(21) Application number: 01948974.9

(22) Date of filing: 29.01.2001

(86) International application number:
PCT/JP01/00584

(87) International publication number:
WO 01/056928 (09.08.2001 Gazette 2001/32)

(84) Designated Contracting States:
AT BE CH CY DE DK ES FI FR GB GR IE IT LI LU
MC NL PT SE TR
Designated Extension States:
AL LT LV MK RO SI

(30) Priority: 31.01.2000 JP 2000027290
31.03.2000 JP 2000099785
02.05.2000 JP 2000133644
27.12.2000 JP 2000399193

(71) Applicant: Ecodevice Laboratory Co., Ltd
Iruma-shi, Saitama 358-0026 (JP)

(72) Inventors:
• Kieda, Nobuo
Fujisawa-shi, Kanagawa 251-0045 (JP)
• Sugihara, Shinichi
Yokohama-shi, Kanagawa 227-0052 (JP)
• Ihara, Tatsuhiko c/o Kinki University
Higashi-Hiroshima-shi, Hiroshima739-2116 (JP)

(74) Representative: Patentanwälte
Ruff, Wilhelm, Beier, Dauster & Partner
Kronenstrasse 30
70174 Stuttgart (DE)

## (54) MATERIAL RESPONSIVE TO VISIBLE LIGHT AND PROCESS FOR PRODUCING THE SAME

(57)     A visible light responsive type material characterized in that said material is titanium oxide comprising at least anatase type titanium oxide, as well as in that a main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum. A method of manufacturing a visible light responsive type material characterized in that amorphous or incomplete crystalline titanium oxide and/or titanium hydroxide (referred to as starting material titanium compound) are heated in the presence of ammonia or a derivative thereof, and said heating is stopped at the time when the light absorption at 450 nm of a material produced is larger than the light absorption at 450 nm of the starting material titanium compound. A light responsive material responding even to visible radiation and a method of manufacturing the same are thus provided.

Fig. 1

**Description**

Technical Field

The present invention relates to a visible light responsive type material and a method of manufacturing the same. The present invention further relates to a method of sterilizing, preventing algae, preventing mildew, and/or preventing stain, a method of clarifying water, and a method of reducing nitrogen oxides contained in the air employing the visible light responsive type material of the present invention.

The visible light responsive type material of the present invention is useful as a photocatalyst, photosensor, photoelectric cell material, photoantistain material, photohydrophilic material, photobactericidal material, and the like.

Technical Background

The use of photocatalysts comprising anatase titanium dioxide in antibacterial tile, self-cleaning building materials, ultrahydrophilic materials, nonodorous and deodorizing materials, water purification, cancer treatment, and the like is known (The Photoclean Revolution (Akira Fujishima et al.)), and various applications are being actively developed. Specifically, for example, WO 94/11092 discloses an air treatment method based on a photocatalyst used under indoor lighting. Japanese Unexamined Patent Publication (KOKAI) Heisei No. 7-102678 discloses a method of preventing in-hospital infection using a photocatalyst. Japanese Unexamined Patent Publication (KOKAI) Heisei Nos. 8-67835 and 8-164334 disclose antibacterial coating materials. And WO 96/29375 discloses an ultrahydrophilic material.

However, anatase titanium dioxide requires ultraviolet light of 400 nm or less as excitation radiation. By contrast, the solar radiation and artificial lighting that are available as sources of excitation radiation comprise much more visible radiation than ultraviolet radiation. However, photocatalysts comprising the above-mentioned titanium dioxide unfortunately are nearly incapable of exploiting visible radiation, and from the perspective of energy conversion efficiency, are extremely inefficient. This inefficiency constitutes a substantial barrier to their practical application.

Accordingly, photocatalysts capable of exploiting visible radiation are gradually being developed. For example, Japanese Unexamined Patent Publication (KOKAI) Heisei No. 10-146530 discloses a titanium oxide photocatalyst with an O/Ti atom number ratio in layers deeper than the surface that is lower than the O/Ti atom number ratio at the surface. This photocatalyst is formed by heating a complex of titanium alkoxide and a chelating agent (for example, acetyl acetone) at about 500°C under an oxidizing atmosphere. However, there are problems in that since titanium alkoxide and a chelating agent (for example, acetyl acetone) are employed in this method, the manufacturing cost is high, and since it is necessary to ensure different O/Ti atom number ratios on the surface and in the interior, it is extremely difficult to control manufacturing conditions. Further, it is stated in the embodiments that activity is achieved by irradiation with light of 420 nm or above, but the activity achieved is quite low and is not of a degree suited to actual practice.

A catalyst having activity under irradiation with visible light that is comprised of titanium dioxide having stable oxygen defects is also known (WO 00/10706). That photocatalyst is obtained, for example, by subjecting a starting material in the form of ST-01, a known ultraviolet radiation type photocatalyst manufactured by Ishihara Sangyo, to a plasma treatment with hydrogen, argon, or the like. ST-01, manufactured by Ishihara Sangyo, is a material having chiefly ultraviolet radiation activity, and as shown in Table 5 (Powder F), exhibits visible radiation activity up to nearly 420 nm, although of a degree much lower than that for ultraviolet radiation. However, it exhibits essentially no activity at 470 nm or more. By contrast, the photocatalyst described in above-cited WO 00/10706 is capable of photooxidation of NO with light having a wavelength of not just around 420 nm, but up to about 600 nm, and can be considered a true visible light photocatalyst.

However, since a plasma treatment was employed, a pressure reduction system was required. As a result, there are problems in that powder treatment, particularly uniform mixing, is difficult and the process is unsuited to continuous production.

Generally known wet methods of manufacturing anatase titanium oxide are (1) hydrolysis of a solution containing titanium such as titanyl sulfate, titanium sulfate, or the like; (2) hydrolysis of an organic titanium compound such as titanium alkoxide; and (3) sintering a precipitate obtained by neutralization, hydrolysis or the like of a titanium halide solution such as titanium tetrachloride.

As stated above, attempts have been made to develop visible radiation photocatalysts employing titanium alkoxide. However, at present, no visible radiation photocatalyst or visible light responsive material with inexpensive starting materials in the form of titanium sulfate or titanium chloride is known.

Accordingly, the object of the present invention is to provide a novel photoresponsive material responding even to visible radiation that can be manufactured at low cost, and a method of manufacturing the same.

Disclosure of the Invention

The present invention relates to a visible light responsive type material, characterized in that said material is titanium oxide comprising at least anatase type titanium oxide, as well as in that a main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Further, the present invention relates to a method of manufacturing a visible light responsive type material characterized in that amorphous or incomplete crystalline titanium oxide and/or titanium hydroxide (referred to as starting material titanium compound) are heated in the presence of ammonia or a derivative thereof, and the heating is stopped at the time when the light absorption at 450 nm of a material produced is larger than the light absorption at 450 nm of the starting material titanium compound.

Brief Description of the Drawings

Fig. 1 shows ESR spectra of the visible light responsive type material of the present invention (Embodiment 1) measured at 77 K in vacuum. The upper segment is a spectrum measured in darkness, the middle segment is a spectrum measured with irradiation by light (light below 420 nm was cut off in light from a mercury lamp) having a wavelength of not less than 420 nm, and the lower segment is a spectrum measured with irradiation with light from a mercury lamp from which light of less than 420 nm was not cut off.

Fig. 2 shows ESR spectra of the visible light responsive type material of the present invention (Embodiment 1) measured at ordinary temperature in vacuum. The upper segment is a spectrum measured in darkness, the middle segment is a spectrum measured with irradiation by light (light below 420 nm was cut off in light from a mercury lamp) having a wavelength of not less than 420 nm, and the lower segment is a spectrum measured with irradiation with light from a mercury lamp from which light of less than 420 nm was not cut off.

Fig. 3 gives the results of measurement by XRD of the product of Embodiment 1 (upper segment) and a hydrolysis product (dried at 50°C) (lower segment).

Fig. 4 shows ESR spectra measured with irradiation through a filter (L-42) cutting off light (obtained using a 500 W high-pressure mercury lamp) below 420 nm employing a vacuum (upper segment), air (middle segment), and isopropanol (lower segment) as the measurement atmosphere.

Fig. 5 shows an ESR spectrum (measurement temperature 77 K) measured with irradiation through a filter (L-42) cutting off light (obtained using a 500 W high-pressure mercury lamp) below 420 nm for the product of Embodiment 4.

Fig. 6 is a graph showing the relation between the NO elimination rate and the heating temperature shown in Embodiment 8.

Fig. 7 is a graph showing the relation between the $NO_2$ generation rate and heating temperature shown in Embodiment 8.

Fig. 8 is a graph showing the relation between the NOx elimination rate and the heating temperature shown in Embodiment 8.

Fig. 9 is a graph showing the relation between the NO elimination rate and the heating time shown in Embodiment 9.

Fig. 10 is a graph showing the relation between the $NO_2$ generation rate and heating time shown in Embodiment 9.

Fig. 11 is a graph showing the relation between the NOx elimination rate and the heating time shown in Embodiment 9.

Fig. 12 is a graph showing the relation between the number of times washed after heating and the NO elimination rate shown in Embodiment 10-1.

Fig. 13 is a graph showing the relation between the number of times washed after heating and the $NO_2$ generation rate shown in Embodiment 10-1.

Fig. 14 is a graph showing the relation between the number of times washed after heating and the $NO_x$ elimination rate shown in Embodiment 10-1.

Fig. 15 shows the relation between the number of times washed and the pH and chlorine ion concentration (titanium chloride employed as the hydrolysis product starting material) of the water separated from the material after washing.

Fig. 16 shows the $NO_x$ elimination activity levels of each sample obtained in Embodiment 10-2.

Fig. 17 shows the IR spectrum at 0 times washed divided by the IR spectrum at 6 times washed (A), and the IR spectrum at 1 time washed divided by the IR spectrum at 6 times washed (B), obtained in Embodiment 10-2.

Fig. 18 shows a graph for explanation of the results of measurement with an X-ray diffraction analyzer of changes by the sintering temperatures of sample powder G obtained in Manufacturing Example 1; powders A, B, and C obtained in Embodiments 12-1 through 12-3; and powders D and E obtained in Comparative Examples 12-1 and 12-2 (F in Comparative Example 12-3 was a commercial product).

Fig. 19 shows a graph showing reflectance spectra measured with a color analyzer for sample powder G obtained in Manufacturing Example 1; powders A, B, and C obtained in Embodiments 12-1 through 12-3; and powders D, E, and F obtained in Comparative Examples 12-1 and 12-3.

Fig. 20 shows an ESR spectrum measured for the visible light responsive type material of the present invention (Embodiment 12-1) with irradiation by light having a wavelength of not less than 420 nm (light below 420 nm was cut off in light from a high-pressure mercury lamp) at 77 K in vacuum.

Fig. 21 shows an ESR spectrum measured for the visible light responsive type material of the present invention (Embodiment 13) with irradiation by light having a wavelength of not less than 420 nm (light below 420 nm was cut off in light from a high-pressure mercury lamp) at 77 K in vacuum.

Fig. 22 shows an ESR spectrum measured for the visible light responsive type material of the present invention (Embodiment 14) with irradiation by light having a wavelength of not less than 420 nm (light below 420 nm was cut off in light from a high-pressure mercury lamp) at 77 K in vacuum.

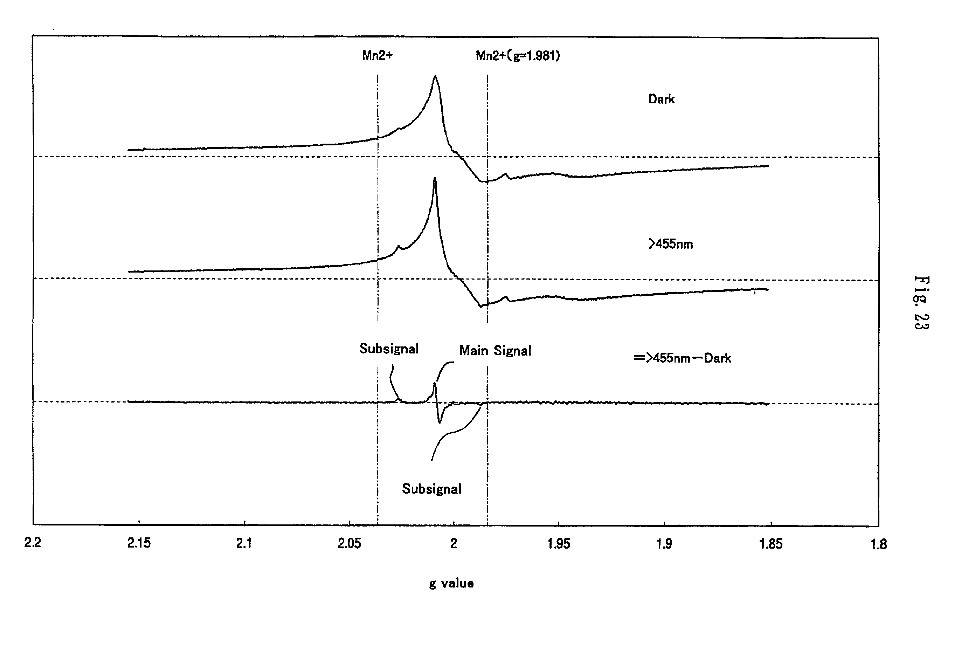

Fig. 23 shows an ESR spectrum measured for the visible light responsive type material of the present invention (Embodiment 7) in darkness at 77 K in nitrogen (760 Torr) (upper segment, dark); an ESR spectrum measured for the visible light responsive type material of the present invention (Embodiment 7) with irradiation by light having a wavelength of not less than 455 nm (light below 455 nm was cut off in light from a xenon lamp) at 77 K in nitrogen (760 Torr) (middle segment >455 nm); and a spectrum obtained by subtracting the ESR spectrum measured in darkness from the ESR spectrum measured with irradiation by light (lower segment, >455 nm-dark).

Best Mode of Implementing the Invention

The visible light responsive type material of the present invention is titanium oxide comprising at least anatase titanium oxide, with a main signal (the strongest signal) having a g value ranging from 2.004 to 2.007 and two subsignals (signals of lesser intensity than the main signal) having a g value ranging from 1.985 to 1.986 and a g value at 2.024 as measured by ESR under the irradiation of light having a wavelength of 420 nm or more at 77 K in vacuum. The visible light responsive type material of the present invention is further characterized in that the three signals (one main signal and two subsignals) are observed in a little amount or substantially not observed in darkness at 77 K in vacuum.

The light having a wavelength of not less than 420 nm employed in ESR in the present invention, as described in the embodiments, is obtained by passing light from a high-pressure mercury lamp (for example, 500 W) through a filter (L-42) cutting out light with a wavelength below 420 nm.

Further, even in ESR measurement conducted with irradiation by light having a wavelength of not less than 455 nm at 77 K in vacuum (obtained by passing light from a xenon lamp (for example, 150 W) through a filter (GG455) cutting light of wavelengths below 455 nm), the visible light responsive type material of the present invention sometimes exhibits a main signal (the strongest signal) having a g value ranging from 2.004 to 2.007 and two subsignals (signals of lesser intensity than the main signal) having a g value ranging from 1.985 to 1.986 and a g value at 2.024.

The visible light photocatalyst comprised of titanium dioxide having stable oxygen defects described in above-cited WO 00/10706 also has a specific ESR spectrum. However, the ESR spectrum of the visible light photocatalyst described in WO 00/10706 has only a signal having a g value ranging from 2.003 to 2.004 in ESR measurement in the dark at 77 K in vacuum, and is heterogenic with the spectrum exhibited by the above-mentioned visible light responsive type material of the present invention.

The visible light responsive type material of the present invention is preferably titanium oxide comprising a main component in the form of anatase titanium oxide, and may additionally comprise amorphous titanium oxide. Alternatively, it may comprise rutile titanium oxide. Further, the anatase titanium oxide need not necessarily have a high degree of crystallinity. Still further, the titanium oxide constituting the visible light responsive type material of the present invention may comprise titanium and oxygen in non-stoichiometric ratio. Specifically, the quantity of oxygen relative to titanium may be lower than the stoichiometric ratio (a theoretic value of 2.00) of titanium dioxide. In the titanium oxide in the visible light responsive type material of the present invention, the molar ratio of oxygen to titanium may be, for example, less than 2.00, for example, 1.00-1.99, or 1.50-1.99. The molar ratio of oxygen to titanium in the titanium oxide in the visible light responsive type material of the present invention can be measured, for example, by X-ray photoelectron spectroscopy.

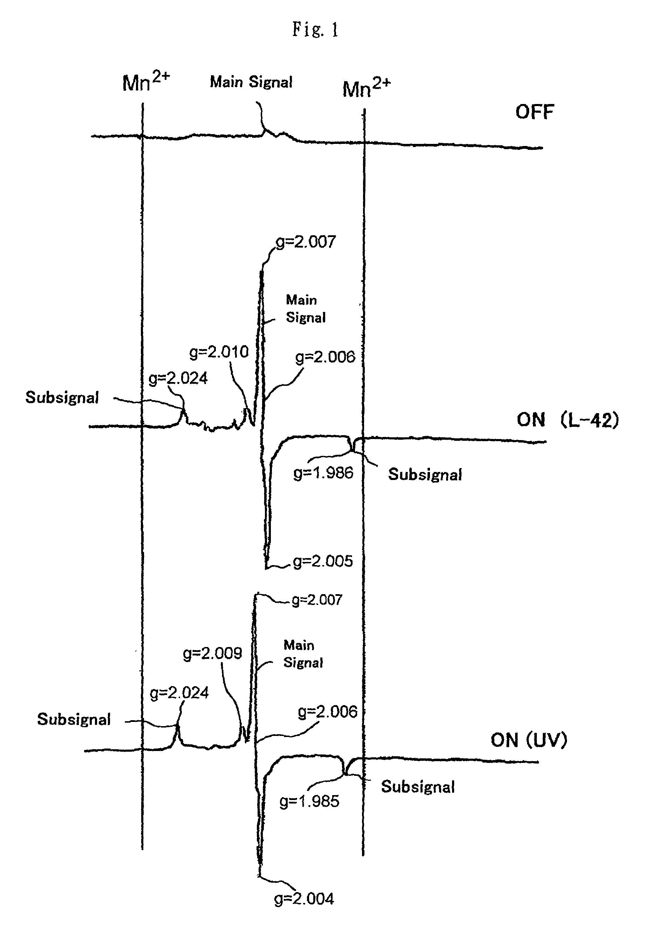

Fig. 1 shows conventional ESR spectra measured at 77 K in vacuum for the visible light responsive type material of the present invention. In the figure, the upper segment is a spectrum measured in darkness and the middle segment is a spectrum measured with irradiation with light having a wavelength of not less than 420 nm (obtained by cutting off light of less than 420 nm in light from a mercury lamp). The lower segment is a spectrum obtained by irradiation with light from a mercury lamp from which light of less than 420 nm has not been cut off. The upper segment, middle segment, and lower segment are all results obtained at identical GAIN.

In the spectrum of the upper segment of Fig. 1, the main signal having a g value ranging from 2.004-2.007 was measured as being quite small and the two subsignals having g values of 1.985-1.986 and 2.024 were essentially not detected. Further, as is clear from a comparison of the upper segment and middle segment spectra in Fig. 1, in the middle segment spectrum, the main signal having a g value ranging from 2.004 to 2.007 and the two subsignals having g values ranging from 1.985 to 1.986 and 2.024 are substantially much greater in intensity than those of the upper segment spectrum. Further, as is clear from a comparison of the middle segment and lower segment spectra of Fig. 1, the intensity of the main signal having a g value of 2.004 to 2.007 and those of the two subsignals having g values of 1.985 to 1.986 and 2.024 essentially did not differ regardless of whether or not light of less than 420 nm was included in the irradiating light.

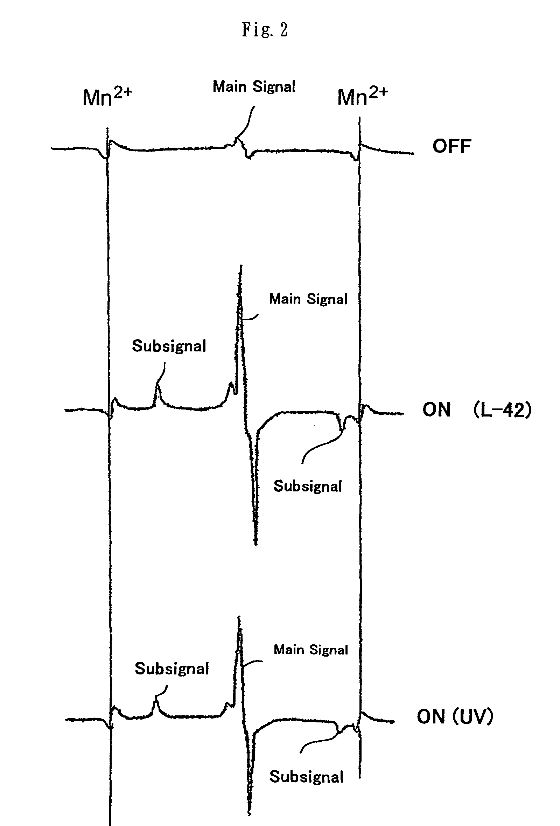

Further, as shown in Fig. 2, the main signal having a g value of 2.004-2.007 was observed to be quite small and the two subsignals having g values ranging from 1.985 to 1.986 and 2.024 were essentially not detected for the visible light responsive type material of the present invention in darkness at ordinary temperature in vacuum. Further, it was found that the three signals were detected by ESR with irradiation by light having a wavelength of not less than 420 nm and light from a mercury lamp from which light of less than 420 nm had not been cut off at ordinary temperature in vacuum. In Fig. 2, the upper segment is a spectrum measured in darkness and the middle segment is a spectrum measured with irradiation by light having a wavelength of not less than 420 nm (obtained by cutting off light of less than 420 nm in light from a mercury lamp). The lower segment is a spectrum obtained by irradiation with light from a mercury lamp from which light of less than 420 nm was not cut off. The upper, middle, and lower segments are all the results of measurements made at identical GAIN.

In the visible light responsive type material of the present invention, the above-described three signals are all attributed to radicals caused by hole complement. As shown in the embodiments, this is clear from ESR spectra in an isopropanol (an electron donor molecule) atmosphere and in air (the oxygen in air is an electron acceptor molecule).

In addition to the above-described signals, the visible light responsive type material of the present invention may also have a subsignal having a g value ranging from 2.009 to 2.010 when measured with irradiation by light having a wavelength of not less than 420 nm at 77 K in vacuum. The subsignal having a g value ranging from 2.009 to 2.010 is shown in the ESR spectrum of the middle segment of Fig. 1.

As set forth above, the visible light responsive type material of the present invention has a characteristic ESR signal. In addition, it is also a colored material. For example, when the reflectance for light with a wavelength of 600 nm is designated as 1 (or 100 percent), the reflectance for light with a wavelength of 450 nm can be not greater than 0.85 (or 85 percent), preferably not greater than 0.80 (or 80 percent), and still more preferably, not greater than 0.70 (or 70 percent). The greater the coloration, the greater the tendency toward visible light responsive activity. The reflectance referred to here is the result of measurement with a spectrophotometer such as that indicated in the embodiments further below. Although reflectance can also be measured with a color analyzer, the evaluation of the above-mentioned reflectance is conducted with a photospectrometer for better precision.

As set forth above, the visible light responsive type material of the present invention has a characteristic ESR signal. In addition, as described specifically in detail in the embodiments, it also has oxidation activity on NO for light in the visible range. Specifically, irradiation with visible light with a wavelength of at least 520 nm, or lower, results in NO oxidation activity. In the preferred material, irradiation with visible light with a wavelength of 570 nm or less results in NO oxidation activity.

The visible light responsive type material of the present invention can be manufactured from a starting material in the form of amorphous or incomplete crystalline titanium oxide (including hydrous titanium oxide) and/or titanium hydroxide. The titanium compound starting material can be obtained by a wet method such as the sulfuric acid method or chloride method. More specifically, the titanium compound starting material can be obtained by hydrolyzing titanium chloride or titanium sulfate with ammonium hydroxide. Alternatively, the titanium compound starting material can be obtained by hydrolyzing titanium alkoxide with water or hydrolyzing titanium alkoxide with an ammonium hydroxide aqueous solution. However, from the perspective of the low cost of the starting materials, those obtained by hydrolysis of titanium chloride or titanium sulfate with ammonium hydroxide are preferred in industrial production. Accordingly, the hydrolysis of titanium chloride or titanium sulfate with ammonium hydroxide is described below.

The above-mentioned hydrolysis can be conducted, for example, by continuously or intermittently adding ammonium hydroxide aqueous solution to a titanium chloride aqueous solution or titanium sulfate aqueous solution, or continuously or intermittently adding a titanium chloride aqueous solution or titanium sulfate aqueous solution to an ammonium hydroxide aqueous solution. The concentrations of the titanium chloride aqueous solution, titanium sulfate aqueous solution, and ammonium hydroxide aqueous solution can be suitably determined. In the hydrolysis, the amount of ammonium hydroxide added is suitably adjusted to produce an alkaline reaction solution with a final pH of not less than 8. The titanium chloride may be in the form of titanium trichloride, titanium tetrachloride, or the like, or a mixture thereof. The hydrolysis can be conducted, for example, at a temperature of 0-100°C, preferably 20-80°C. However, hydrolysis at ordinary temperature is sometimes preferred from the viewpoint of obtaining titanium dioxide of comparatively low crystallinity or that is amorphous.

The hydrolysis product of titanium chloride or titanium sulfate with ammonium hydroxide is desirably washed with water or an ammonium hydroxide aqueous solution and employed as the starting material titanium compound. The washing of the hydrolysis product with water or ammonium hydroxide aqueous solution, for example, can be conducted by filtering the reaction solution comprising the hydrolysis product and further passing water or ammonium hydroxide aqueous solution through the hydrolysis product obtained as a filtrate. This method is preferred because of easy operation that it suffices to add water or ammonium hydroxide aqueous solution to the filtered hydrolysis product as it is and conduct filtration. In addition to the above, the washing of the hydrolysis product with water or ammonium hydroxide aqueous solution can be conducted by, for example, resuspending the hydrolysis product filtrate in water or ammonium hydroxide aqueous solution and filtering the suspension obtained. Washing with water or ammonium hydroxide aqueous solution is conducted to suitably decrease the quantity of residual ammonium salts such as ammonium chloride or ammonium sulfate produced during hydrolysis, and can be conducted multiple times.

Commercial products of amorphous or incomplete crystalline titanium dioxide may also be employed. Examples are incomplete crystalline titanium dioxide such as ST-01 and C-02 manufactured by Ishihara Sangyo.

In the manufacturing method of the present invention, the starting material titanium compound such as amorphous or incomplete crystalline titanium oxide is heated in the presence of ammonia or a derivative thereof. The ammonia may be liquid or gaseous. When using ammonia gas, the starting material titanium compound is heated in an ammonia gas atmosphere. Examples of ammonia derivatives are ammonium salts such as ammonium hydroxide and ammonium chloride; the starting material titanium compound is heated, for example, in the presence of ammonium hydroxide or ammonium chloride.

The heating of the starting material titanium compound in the presence of ammonia or a derivative thereof is stopped when the absorbance of light at a wavelength of 450 nm by the material produced by the heating becomes greater than the absorbance of light at a wavelength of 450 nm by the starting material titanium compound. Usually, the starting material titanium compound is white and its absorbance of light at a wavelength of 450 nm is about 10 percent. By contrast, when the starting material titanium compound is heated in the presence of ammonia or a derivative thereof, it gradually turns yellow. However, this coloration peaks at a certain point and then reduces, finally becoming a compound with absorbance about the same as the starting material titanium compound. Although the absorbance of light at a wavelength of 450 nm varies with the type of starting material titanium compound, type and quantity of ammonia (derivative) co-existed, heating temperature and time and the like, it sometimes reaches a maximum of about 60 percent. The characteristic of the visible light responsive type material is not definitively determined based on the intensity of absorbance of light at a wavelength of 450 nm, but when the absorbance of light at a wavelength of 450 nm is 15 percent or greater (reflectance is 85 percent or less), it has clearly become a material exhibiting visible light responsiveness. Accordingly, in the above-described heat treatment, it is desirable to set conditions so that when reflectance of light with a wavelength of 600 nm is defined as 1 (or 100 percent), the reflectance of light with a wavelength of 450 nm is 0.85 (or 85 percent) or less, preferably 0.80 (or 80 percent) or less, and more preferably, 0.70 (or 70 percent) or less. The absorbance referred to here is the result of measurement with a spectrophotometer such as that indicated in the embodiments further below.

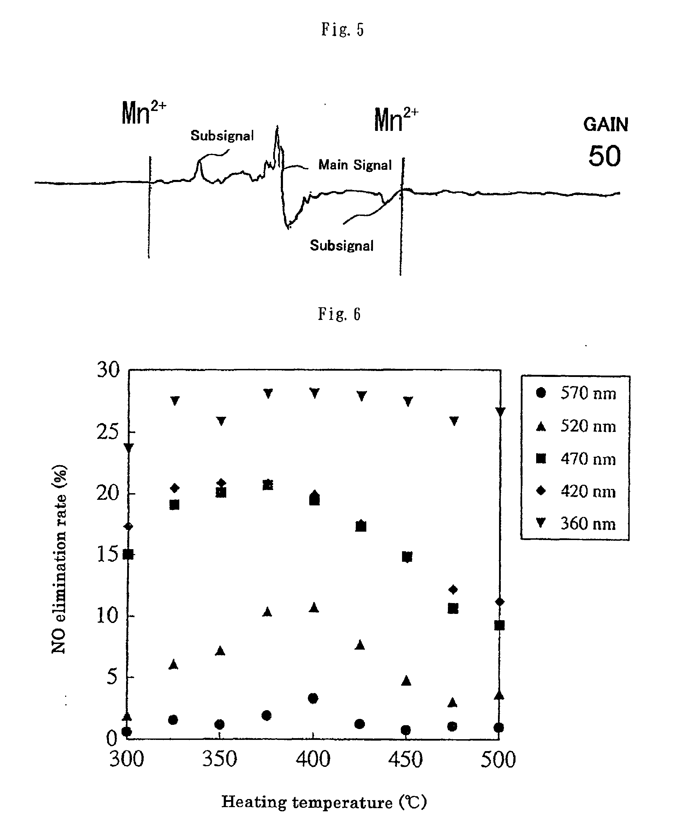

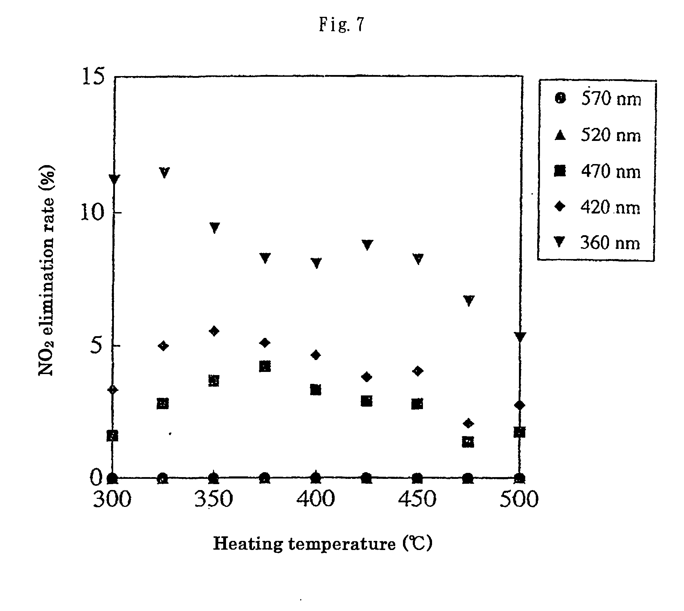

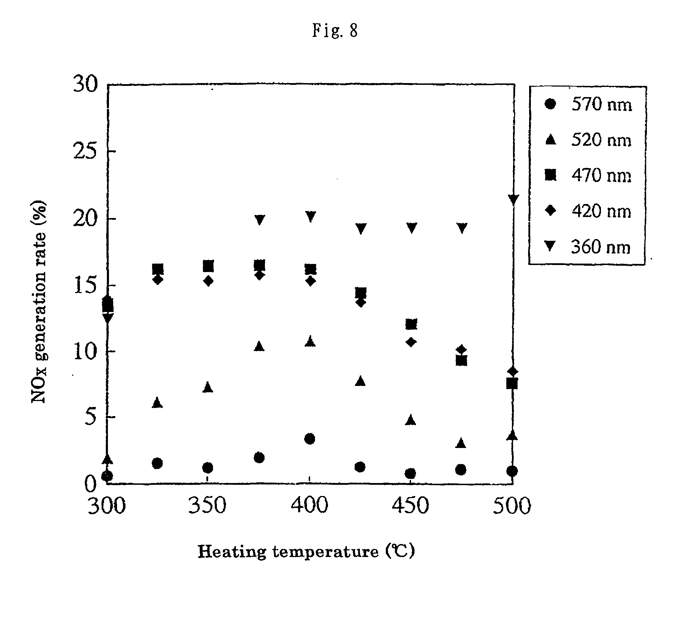

The above-mentioned heating conditions cannot necessarily be specified by just temperature, but the temperature employed falls within a range of 250-550°C, for example. Figs. 6-8 are graphs showing the relation between $NO_x$ elimination (oxidation) activity and heating temperature (with a heating time of 1 hr). Fig. 6 shows the elimination rate of NO, Fig. 7 the elimination rate of $NO_2$, and Fig. 8 the elimination rate of $NO_x$. (For details, see Embodiment 8.) From these graphs, it will be understood that the $NO_x$ elimination rate due to light with wavelengths of 420 and 470 nm is comparatively high with heating to within a range of 300-450°C, and even higher with heating to within a range of 325-425°C, and the $NO_x$ elimination rate due to light with wavelengths of 520 and 570 nm is comparatively high with heating to within a range of 325-450°C, and even higher with heating to within a range of 350-425°C. Accordingly, from the viewpoint of the high elimination rate of $NO_x$ in the visible light range, heating at a temperature ranging from 350-425°C is of greatest preference.

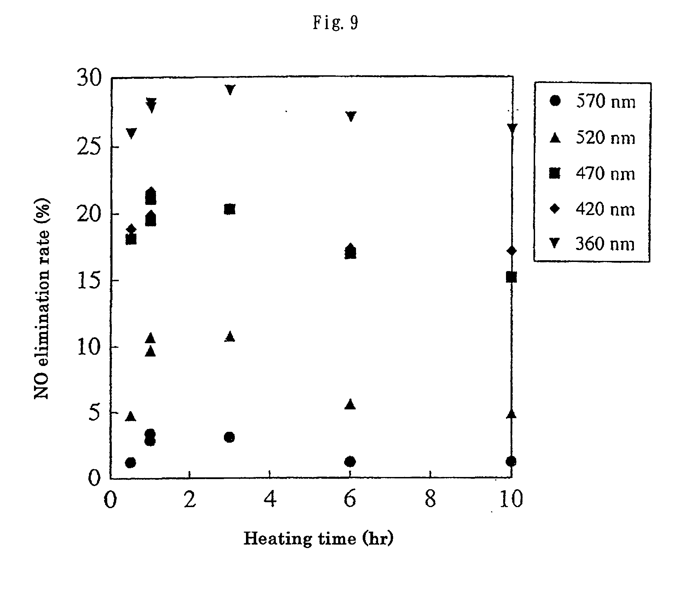

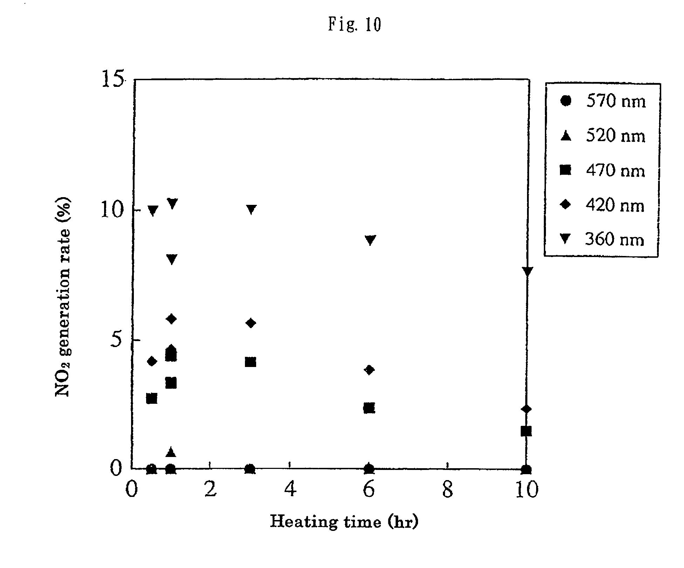

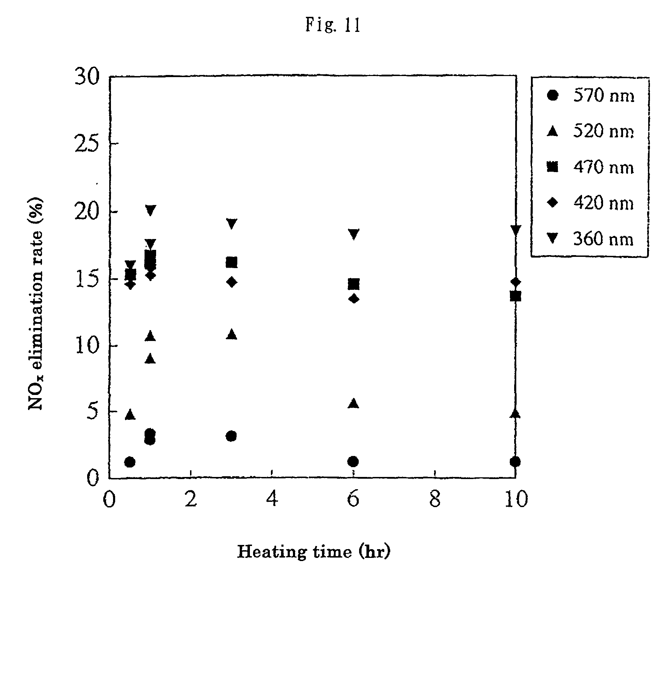

Figures 9-11 show the relation between $NO_x$ elimination (oxidation) activity and the heating time (with a heating temperature of 400°C). Fig. 9 shows the NO elimination rate, Fig. 10 shows the $NO_2$ generation rate, and Fig. 11 shows the $NO_x$ elimination rate. (For details, see Embodiment 9.) These graphs show that from the viewpoint of improving the $NO_x$ elimination rate for light within the visible range having wavelengths of 520 nm and 570 nm, a heating time of at least 30 min, preferably at least 1 hr, is desirable. Further, since no significant change in the $NO_x$ elimination rate was observed when the heating time was extended beyond 1 hr, the maximum heating time is about 3 hr.

The heating can be conducted at ordinary pressure. Further, the heating time can be suitably determined based on the absorbance of light with a wavelength of 450 nm by the material produced by heating.

The above-mentioned heating can be performed with one of the rotary kilns, tunnel kilns, muffle furnaces, or the like commonly employed in this field. When the individual grains of titanium oxide aggregate or sinter by heating, they can be comminuted as needed with a pulverizer.

Further, the material obtained by heating as set forth above can be washed with water or an aqueous solution as necessary. This washing sometimes improves the visible light responsiveness of the visible light responsive type material obtained. Further, based on conditions, a material having good visible light responsiveness can sometimes be obtained without washing.

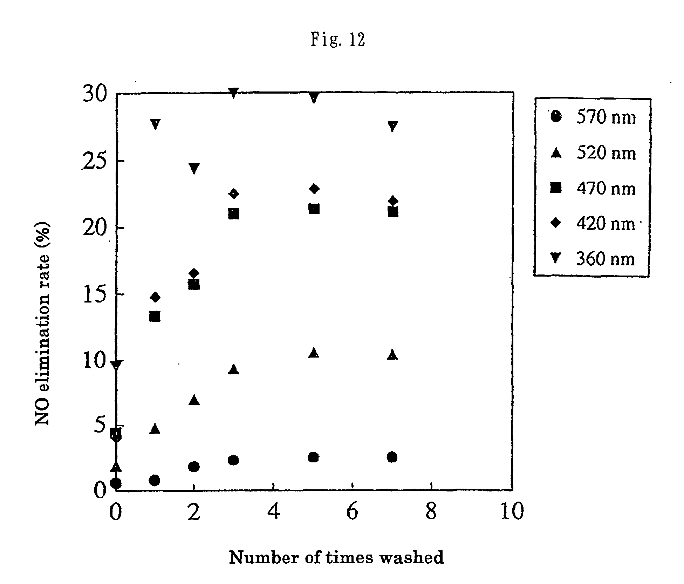

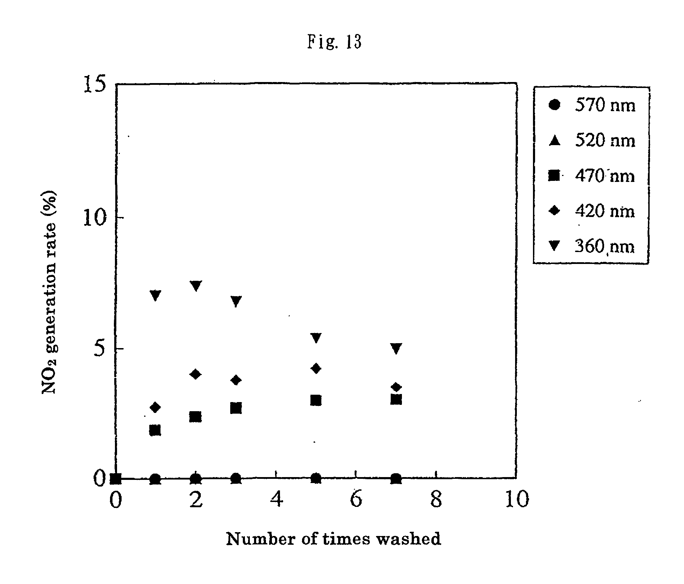

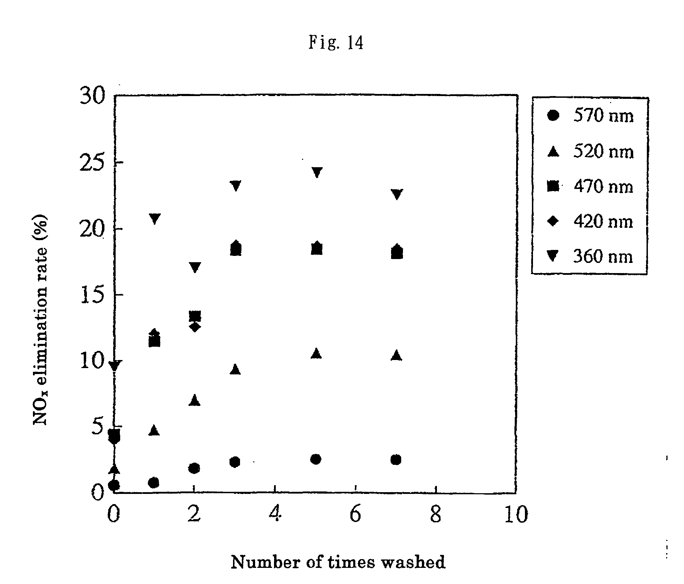

When the amorphous or incomplete crystalline titanium oxide (the starting material titanium compound prior to heating) is those obtained, for example, by hydrolyzing titanium chloride with ammonium hydroxide, a considerable amount of ammonium chloride remains in the hydrolysis product. As a result, heating of the amorphous or incomplete crystalline titanium dioxide to a prescribed temperature as set forth above can convert it to a visible light responsive type material. However, a large quantity of ammonium chloride sometimes remains in the material obtained even after the heat treatment. In such cases, it is sometimes possible to remove the ammonium chloride by washing with water or a suitable aqueous solution to improve the visible light responsiveness of the visible light responsive type material. For example, Figs. 12-14 show graphs demonstrating the relation between the number of times washed and $NO_x$ elimination (oxidation) activity. Fig. 12 shows the NO elimination rate, Fig. 13 the $NO_2$ generation rate, and Fig. 14 the $NO_x$ elimination rate. (For details, see Embodiment 10-1.) From these figures, it will be understood that increasing the number of times washed to a certain point increases $NO_x$ elimination (oxidation) activity, and that washing effectively improves visible light responsiveness.

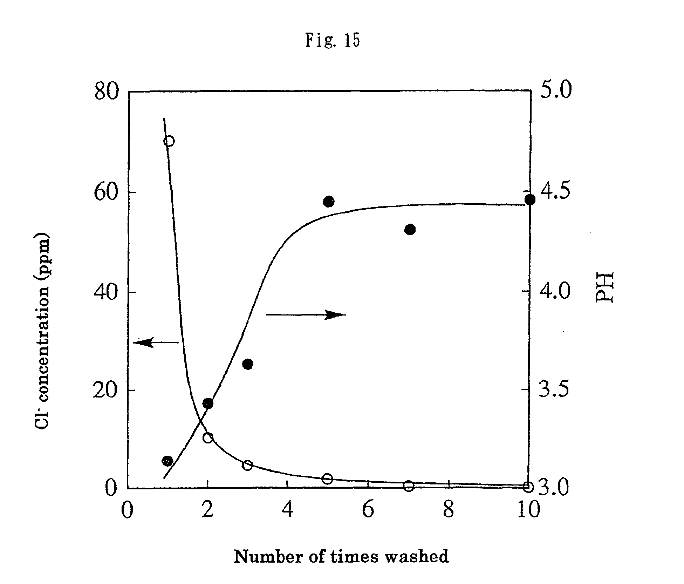

In this case, washing the material obtained by heating with water or an aqueous solution is desirably conducted so that either the pH of the water or aqueous solution separated from the material following washing is 3.5 or greater (pH 3.5-7), or the quantity of chlorine ions (when titanium chloride is employed as the starting material of the hydrolysis product) or quantity of sulfuric acid ions (when titanium sulfate is employed as the starting material of the hydrolysis product) contained in the water or aqueous solution separated from the material following washing decreases. For example, Fig. 15 shows test results indicating the relation between the number of times washed and the pH and chlorine ion concentration (when titanium chloride was employed as the starting material of the hydrolysis product) of the water separated from the material following washing. The results of the number of times washed in Fig. 15 is for the same sample as those of the number of times washed in Figs. 12-14.

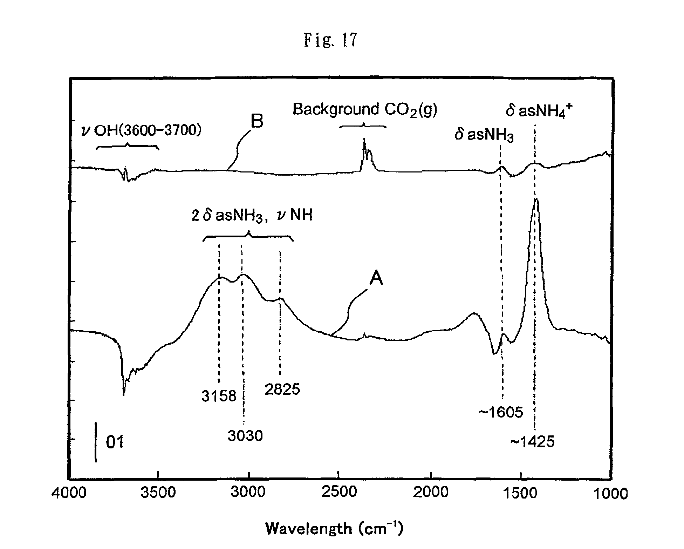

Although washing conditions vary somewhat, Fig. 17 shows the results of an examination of what level of ammonium ions remain in the similarly washed sample following heating (for details, see Embodiment 10-2). From these results, it will be understood that the level (amount of adhesion) of ammonium ions is also reduced by washing.

The visible light responsive type material of the present invention can be a powder or film (thin film). A film (thin film) can be provided on a suitable substrate. The film (thin film) can be formed by coating a starting material titanium compound such as amorphous or incomplete crystalline titanium oxide on a substrate together with a suitable binder, when needed; either incorporating ammonia or a derivative thereof into the coated film or incorporating ammonia or a derivative thereof into the atmosphere; and conducting heating. Alternatively, a film (thin film) can be formed by coating the visible light responsive type material of the present invention in powder form onto a substrate or the like.

Silicon, aluminum, tin, zirconium, antimony, phosphorus, platinum, gold, silver, copper, iron, niobium, tungsten, tantalum, other elements, and compounds containing the same can be coated onto, supported by, or doped into the visible light responsive type material of the present invention.

The visible light responsive type material of the present invention can be employed in a method of sterilizing, preventing algae, preventing mildew, and/or preventing stain. Further, the visible light responsive type material of the present invention can be employed in a method of clarifying water and a method of reducing nitrogen oxides contained in the air.

Embodiments

Embodiments of the present invention are given below. However, the present invention is not limited thereto.

Embodiment 1

To pure ice water (two liters of water) were added 500 g of titanium tetrachloride (special grade, manufactured by Kanto Kagaku K.K.) and the mixture was stirred and dissolved, yielding a titanium tetrachloride aqueous solution. While stirring 200 g of this aqueous solution in a stirrer, about 50 mL of ammonia water (comprising 13 weight percent as $NH_3$) was added as rapidly as possible. The quantity of ammonia water added was adjusted to yield a final pH of about 8 in the aqueous solution. This converted the aqueous solution to a white slurry. After stirring for another 15 min, the mixture was filtered with a suction filter. The filtered precipitate was dispersed in 20 mL of ammonia water (containing 6 weight percent as $NH_3$) and stirred using a stirrer for about 20 hours. The mixture was then suction filtered again, yielding a white hydrolysis product.

The white hydrolysis product obtained was transferred to a crucible and heated to 400°C for 1 hour in air with an electric furnace, yielding a yellow product.

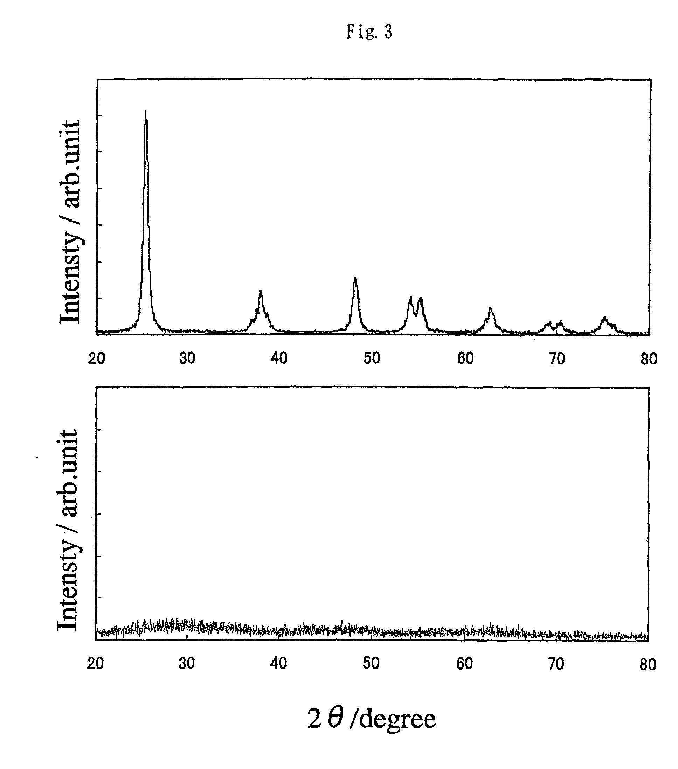

The results of XRD measurement of the obtained product are given in the upper segment of Fig. 3. In addition, the results of XRD measurement of the white hydrolysis product dried at 50°C are given in the lower segment of Fig. 3. From these results, it will be understood that the product obtained by drying the white hydrolysis product at 50°C was amorphous and the obtained product contained anatase titanium dioxide.

The diffuse reflectance spectra of the obtained product and the white hydrolysis product dried at 50°C obtained were measured under the following conditions with a Hitachi Autorecording Spectrophotometer (U-3210) equipped with integrating sphere:

Scan speed:    120 nm/min,
Response:      MEDIUM,
Band pass:     2.00 nm, and
Reference:     barium sulfate.

As a result, when the reflectance at 600 nm of the obtained product was defined as 100 percent, the reflectance thereof at 450 nm was 61 percent. By contrast, when the reflectance at 600 nm of the product obtained by drying the white hydrolysis product at 50°C was defined as 100 percent, the reflectance thereof at 450 nm was 95 percent. Further, when the reflectance at 700 nm of the obtained product was defined as 100 percent, the reflectance thereof at 450 nm was 61 percent. By the contrast, when the reflectance at 700 nm of the product obtained by drying the white hydrolysis product at 50°C was defined as 100 percent, the reflectance thereof at 450 percent was 95 percent.

Further, the ESR spectrum of the obtained product was measured. An ESR unit manufactured by Nippon Denshi, the ES-RE2X, was employed. Measurement was conducted at 77 K or ordinary temperature in vacuum (0.1 Torr or less). The measurement conditions were as follows:

[Basic Parameters]

Measurement temperature: 77 K or ordinary temperature
Field: 324 mT $\pm$ 25 mT
Scan time: 4 min
Mod.: 0.1 mT
Receiver GAIN: 10-100 (measurement sensitivity)
Time constant: 0.1 sec
RF power: 0.1 mW
Light source: 500 W high-pressure mercury lamp
Filter: L-42 (Asahi Technoglass (K.K.))

[Sample Preparation]

Vacuum evacuation: 1 hr or more

[g Value Calculation]

$$g = g_{mn} \times H_{mn}/(H_{mn} + \Delta H) \text{ based on } Mn^{2+} \text{ marker } (g_{mn} = 1.981 \text{ (third from the high}$$

$$\text{magnetic field side)}$$

$H_{mn}$: $Mn^{2+}$ marker magnetic field
$\Delta H$: Amount of change in magnetic field from $H_{mn}$

Fig. 1 (measurement temperature 77 K) and Fig. 2 (measurement temperature ordinary temperature) show the ESR spectra in the dark in the upper segment, the ESR spectrum measured with irradiation with light through a filter (L-42) cutting light (obtained using a 500 W high-pressure mercury lamp) below 420 nm in the middle segment, and the ESR spectrum measured with irradiation of light employing a 500 W high-pressure mercury lamp without using a filter (L-42) cutting light below 420 nm is shown in the lower segment.

A comparison of the spectra of the upper and middle segments of Fig. 1 clearly reveals that in the middle segment spectrum, the main signal having a g value ranging from 2.004 to 2.007 and the two subsignals having g values ranging from 1.985 to 1.986 and 2.024 exhibited intensities stronger than in the spectrum in the upper segment. Further, a comparison of the spectra of the middle and lower segment spectra of Fig. 1 clearly reveals that neither the main signal having a g value ranging from 2.004 to 2.007 nor the two subsignals having g values ranging from 1.985 to 1.986 and 2.024 differed substantially even when light of less than 420 nm was included in the irradiating light.

Further, as shown in Fig. 2, the above-described three signals were observed in the ESR of the visible light responsive type material of Embodiment 1 in darkness and with irradiation with light having a wavelength of 420 nm or more at ordinary temperature in air.

The main signal having a g value ranging from 2.004 to 2.007 and the two subsignals having g values ranging from 1.985 to 1.986 and 2.024 were not observed under any of the ESR measurement conditions in the white hydrolysis product dried at 50°C.

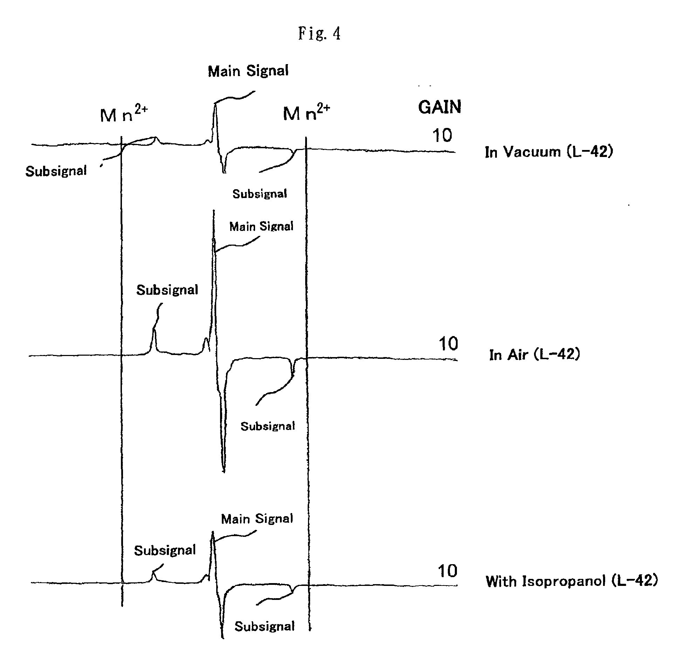

ESR spectra were measured by replacing the vacuum measurement atmosphere with an air or isopropanol and employing the same conditions of light irradiation through a filter (L-42) cutting out light (obtained using a 500 W high-pressure mercury lamp) of less than 420 nm. The results are given in Fig. 4. In the figure, the upper segment gives the results of measurement in vacuum, the middle segment gives those for air, and the lower segment gives those for isopropanol. The main signal and the two subsignals were smallest in vacuum, increased somewhat in isopropanol relative to in vacuum, and were largest in air, as shown in the middle segment. While isopropanol is an electron donor molecule, the oxygen in the air is an electron acceptor molecule. Thus, these results suggest that the three above-described signals can be attributed to radicals caused by hole complement.

Embodiment 2

The white hydrolysis product obtained in Embodiment 1 was heated under the same conditions as in Embodiment 1 with the exception that the heating time was set to 20 min or 3 hr, and yellow products were obtained. The diffuse reflectance spectra of these products were measured in the same manner as in Embodiment 1. When the reflectance at 600 nm of the sample heated for 20 min was defined as 100 percent, the reflectance thereof at 450 nm was 69 percent. When the reflectance at 600 nm of the sample heated for 3 hr was defined as 100 percent, the reflectance thereof at 450 nm was 68 percent. When the reflectance at 700 nm of the sample heated for 20 min was defined as 100 percent, the reflectance thereof at 450 nm was 68 percent. And when the reflectance at 700 nm of the sample heated for 3 hr was defined as 100 percent, the reflectance thereof at 450 nm was 68 percent.

Embodiment 3

With the exception that the titanium tetrachloride was replaced with titanium trichloride, a white hydrolysis product was obtained in the same manner as in Embodiment 1. The white hydrolysis product was heated for 1 hr at 400°C, yielding a yellow product. The ESR spectrum (measurement temperature 77 K) of this product that was measured with irradiation by light passing through a filter (L-42) cutting light (employing a 500 W high-pressure mercury lamp) below 420 nm exhibited a main signal and two subsignals having the same g values as in the middle segment of Fig. 1.

Embodiment 4

A 1.6 kg quantity of anatase titanium dioxide powder (C-02 manufactured by Ishihara Sangyo (K.K.)) was placed in a heated container having an internal capacity of 25 L and a baffle on an internal wall, and the container was loaded into an externally heated rotary kiln unit. The interior of the above-mentioned heated container was purged with nitrogen gas, after which 1.5 L/min of ammonium gas based on nitrogen gas was passed through. Simultaneously, the interior of the container was heated to 400°C with an external heater, and the container was heated for 90 min while being rotated. Following heating, the container was cooled to room temperature, yielding a yellow product. Fig. 5 shows the ESR spectrum (measurement temperature 77 K) for measurement with irradiation by light passing through a filter (L-42) cutting out light (obtained using a 500 W high-pressure mercury lamp) below 420 nm.

Embodiment 5

A 3 g quantity of the powder obtained in Embodiment 1 was suspended in 100 mL of pure water and stirred for 1 hr with a magnetic stirrer. The solution obtained was suction filtered. Sample remaining on the filter paper was again stirred in pure water and suction filtered. Filtration was repeated three times until the filtrate reached 6-7 on pH test paper.

The powder obtained was left standing for a day in a drier set to 110°C and dried, yielding the material of the present invention.

Embodiment 6

A 23 kg quantity of titanium tetrachloride was gradually added to 207 kg of water having a temperature of 0°C held in a 300 L reaction vessel (permitting cooling and stirring). At that time, the temperature of the aqueous solution reached a maximum of 6°C. The titanium chloride was stirred for two days to prepare a transparent titanium tetrachloride aqueous solution. When 12.5 percent ammonia water was added dropwise while stirring the titanium tetrachloride aqueous solution that had been prepared, the solution gradually clouded over. The amount of ammonia water was adjusted so that the clouded solution reached pH 8.

The clouded solution was suction filtered. The white precipitate remaining on the filter paper weighed 131 kg. The white precipitate was dispersed in 200 kg of ammonia water (6 percent as $NH_3$), stirred for 24 hr, and suction filtered. The white precipitate following filtering weighed 108 kg. The white precipitate was placed in a forced ventilation shelf-type drier set to 50°C and dried for four days. Following drying, the sample weighed 17 kg.

A 1 kg quantity of the dried sample was placed in an alumina crucible ($20 \times 20 \times 5$ cm), the crucible was placed in a gas furnace, a thermocouple was placed on the surface of the sample, and the sample was sintered for 1 hr so that the sample temperature reached 400°C.

After cooling, the material of the present invention was obtained in thick, yellow form. This material was comminuted in a mortar and used in the evaluation described below.

Embodiment 7

A 3 g quantity of the powder prepared in Embodiment 6 was suspended in 100 mL of pure water and stirred for 1 hr with a magnetic stirrer. The solution obtained was suction filtered. The sample remaining on the filter paper was again stirred in pure water and suction filtered. Filtration was repeated three times until the filtrate reached 6-7 on pH test paper.

The powder obtained was left standing for a day in a drier set to 110°C and dried, yielding the material of the present invention.

The ESR of the material of the present invention obtained was measured. A JEOL JES-TE300 was employed in ESR measurement under conditions of a temperature of 77 K, a nitrogen atmosphere (760 Torr), a center field of 330 mT ± 25 mT, a modulation frequency of 100 kHz, an RF power of 1.0 mW, a scan time of 4 min, a time constant of 0.1 sec, and a light source in the form of a 150 W xenon lamp. A Sanei Denki Seisakujo SUPERBRIGHT-152S was employed to permit irradiation of the sample with light passing through a GG455 Filter (made by Schott Japan) in the measurement. The results are given in Fig. 23.

Test Examples

NO$_x$ Elimination Activity

A 0.2 g quantity of the samples prepared in Embodiments 1, 3, 5, 6, and 7 and commercial titanium oxide powder (ST-01, made by Ishihara Sangyo (K.K.)) (Comparative Example 1) were respectively coated on glass plates ($6 \times 6$ cm), which were placed in a Pyrex glass reaction vessel (internal diameter 160 mm, thickness 25 mm). Monochrome light with a half-width of 20 nm was irradiated with an irradiation unit (product name: SM-5 Model CT-10, made by Nippon Bunko) employing a 300 W xenon lamp as light source.

A 1.5 L/min flow of 0 percent RH in humidity simulated polluted air (NO: 1 ppm) was continuously fed into the reaction vessel and the change in concentration of NO and $NO_2$ was monitored at the reaction discharge outlet. The NO concentration was measured by the chemoluminescence method using ozone. The $NO_x$ elimination rate (%) (=NO reduction rate - $NO_2$ generation rate) at each measurement wavelength was obtained from the cumulative value of the values monitored over 1 hr. Nitrogen Oxides Analyzer Model 8840 made by Monitor Labs, Inc. was employed in the measurement of NO concentration.

Table 1

|  | NO elimination rate (%) |
|---|---|
| Embodiment 1 | 1.0 |
| Embodiment 3 | 3.8 |
| Embodiment 5 | 6.0 |
| Embodiment 6 | 4.4 |
| Embodiment 7 | 20.5 |
| Comparative Example 1 | 0.4 |

Embodiment 8 (The relation between heating temperature and $NO_x$ elimination rate)

With the exception that the heating temperatures employed were set to 300°C, 325°C, 350°C, 375°C, 400°C, 425°C, 450°C, 475°C, or 500°C, the white precipitates (hydrolysis products) obtained in Embodiment 6 were heated under the same conditions (heating time 1 hr) as in Embodiment 1. Washing and drying were conducted under the same conditions as in Embodiment 7, yielding yellow products. The diffuse reflectance spectra of these products were measured; Table 2 gives the reflectances thereof at 450 nm when the reflectance at 600 nm or 700 nm was defined as 100 percent. The reflectance of ST-01 made by Ishihara Sangyo (K.K.) is given in Table 2 for reference. The $NO_x$ elimination activities of each of the samples obtained were measured in the same manner as in the above test example and are given in Figures 6-8.

Table 2

| Heating temperature (°C) of sample | Reflectance at 450 nm as compared to 600 nm | Reflectance at 450 nm as compared to 700 nm |
|---|---|---|
| 300 | 81% | 78% |
| 350 | 81% | 78% |
| 400 | 77% | 74% |
| 450 | 81% | 79% |
| 500 | 82% | 80% |
| ST-01 | 95% | 91% |

Embodiment 9 (The relation between heating time and the NO elimination rate)

With the exception that the white precipitate (hydrolysis product) obtained in Embodiment 6 was heated for 0.5 hr, 1 hr, 3 hrs, 6 hrs, or 10 hrs, it was heated under the same conditions as in Embodiment 1 (heating temperature 400°C) and washed and dried under the same conditions as in Embodiment 7, yielding yellow products. The diffuse reflectance spectra of these products were measured; Table 3 gives the reflectances thereof at 450 nm when the reflectance at 600 nm or 700 nm was defined as 100 percent. The reflectance of ST-01 made by Ishihara Sangyo K. K. is given in Table 3 for reference. The $NO_x$ elimination activities of each of the samples obtained were measured in the same manner as in the above test example and are given in Figures 9-11.

Table 3

| Sintering time (h) of sample | Reflectance at 450 nm as compared to 600 nm | Reflectance at 450 nm as compared to 700 nm |
|---|---|---|
| 0.5 | 75% | 73% |
| 1.0 | 77% | 74% |
| 3.0 | 68% | 66% |
| 6.0 | 67% | 67% |
| 10.0 | 76% | 74% |

Table 3 (continued)

| Sintering time (h) of sample | Reflectance at 450 nm as compared to 600 nm | Reflectance at 450 nm as compared to 700 nm |
|---|---|---|
| ST-01 | 95% | 91% |

Embodiment 10-1 (The relation between washing after heating and the elimination rate(1))

A 3 g quantity of the powder prepared in Embodiment 6 was suspended in 100 mL of pure water and stirred for 1 hr with a magnetic stirrer. The solution obtained was suction filtered. The sample remaining on the filter paper was again stirred in pure water and suction filtered. This filtration was repeated 1 time, 2 times, 3 times, 5 times, or 7 times. The powders obtained were placed for a day in a drier set to 110°C and dried. The $NO_x$ elimination activity of each of the samples obtained was measured in the same manner as in the test example above. The results are given in Figures 12-14.

The relation between the number of times washed and the pH and chlorine ion concentration of the water separated from the material following washing is given in Fig. 15.

Embodiment 10-2 (The relation (2) between washing following heating and elimination rate)

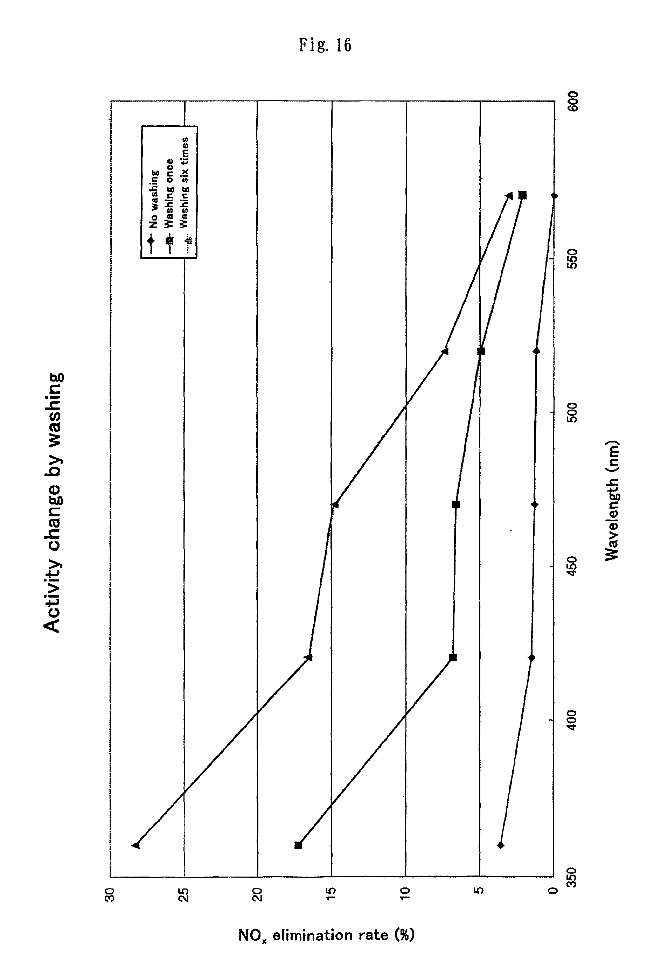

A 3 g quantity of the powder prepared in Embodiment 6 was suspended in 100 mL of pure water and left standing for 10 min while applying ultrasound. The solution obtained was suction filtered. The samples remaining on the filter paper was again stirred in pure water and suction filtered. This filtration was repeated 0 time, 1 time, and 6 times. The powders obtained were left standing for a day in a drier set at 110°C and dried. The $NO_x$ elimination activity of each of the samples obtained was measured in the same manner as in the test example above. The results are given in Fig. 16.

The IR of each of the samples obtained was also measured and the value (A) of the IR spectrum when washed 0 time divided by the IR spectrum when washed 6 times, and the value (B) of the IR spectrum when washed 1 time divided by the IR spectrum when washed 6 times, are given in Fig. 17.

Embodiment 11 (Examination of the water washing conditions after hydrolysis and before heating)

With the exception that the stirring time in pure water was 10 min or one day, the material of the present invention was obtained in the same manner as in Embodiment 5. The $NO_x$ elimination activity of each of the samples obtained was measured in the same manner as in the test example above. The results are given in Table 4 below.

Table 4

| Stirring time 10 min x 3 times | | | |
|---|---|---|---|
| Wavelength (nm) | NO reduction (%) | $NO_2$ generation (%) | $NO_x$ elimination (%) |
| 570 | 2.0 | 0 | 2.0 |
| 520 | 8.2 | 1.2 | 7.0 |
| 470 | 18.3 | 3.8 | 14.5 |
| 420 | 18.2 | 3.9 | 14.3 |
| 360 | 25.3 | 9.3 | 16.0 |
| Stirring time 1 day x 3 times | | | |
| Wavelength (nm) | NO reduction (%) | $NO_2$ generation (%) | $NO_x$ elimination (%) |
| 570 | 2.4 | 0 | 2.4 |
| 520 | 7.4 | 0.6 | 6.8 |
| 470 | 15.8 | 2.1 | 13.7 |
| 420 | 15.9 | 2.3 | 13.5 |
| 360 | 25.0 | 7.1 | 17.9 |

Embodiment 12 (Method of manufacturing visible light responsive material from titanium sulfate (1))

Manufacturing Example 1

Titanium sulfate (IV) aqueous solution (product name: Titanium sulfate (IV), made by Kanto Kagaku K.K. (Shika first grade, an aqueous solution comprising not less than 24 weight percent of titanium sulfate (IV)) was employed without alteration as titanium sulfate (TV) solution. While mixing 50 g of this aqueous solution with a stirrer, 58 mL of ammonia water (ammonia solution as provided:water = 1:1) was added as rapidly as possible with a buret. When stirring was continued, clouding began and gradually increased viscosity. Ammonia water was further added to adjust the pH to 7 as indicated by universal test paper. When 24 hr had elapsed, filtration was conducted with a suction filter. The white product on the filter paper was stirred in ammonia water that had been adjusted to pH 11, filtering was repeated 8 times, and washing was conducted, yielding a white powder. The powder obtained was dried at 50°C, yielding sample powder G. The BET surface area of the hydrolysis product obtained (sample powder G) was 308.7 $m^2$/g.

Embodiment 12-1

An 8 g quantity of sample powder G obtained in Manufacturing Example 1 was charged to a crucible, transferred to an electric furnace, and sintered for 60 min at 400°C, yielding 6.3 g of a clear yellow powder A with a BET surface area of 89.4 $m^2$/g.

Embodiment 12-2

An 8 g quantity of sample powder G obtained in Manufacturing Example 1 was charged to a crucible, transferred to an electric furnace, and sintered for 60 min at 300°C, yielding 6.5 g of a clear yellow powder B with a BET surface area of 101 $m^2$/g.

Embodiment 12-3

An 8 g quantity of sample powder G obtained in Manufacturing Example 1 was charged to a crucible, transferred to an electric furnace, and sintered for 60 min at 500°C, yielding 6.2 g of a pale yellow powder C with a BET surface area of 52.6 $m^2$/g.

Comparative Example 12-1

An 8 g quantity of sample powder G obtained in Manufacturing Example 1 was charged to a crucible, transferred to an electric furnace, and sintered for 60 min at 100°C, yielding 7.6 g of a white powder D with a BET surface area of 249 $m^2$/g.

Comparative Example 12-2

An 8 g quantity of sample powder G obtained in Manufacturing Example 1 was charged to a crucible, transferred to an electric furnace, and sintered for 60 min at 200°C, yielding 7.1 g of a white powder E with a BET surface area of 200 $m^2$/g.

Comparative Example 12-3

Commercially available titanium oxide powder (ST-01 made by Ishihara Sangyo K.K.) was employed as powder F. Powder F is a white powder with a BET surface area of 320 $m^2$/g.

Evaluation of Characteristics

The various characteristics of the powders obtained in Manufacturing Example 1, Embodiments 12-1 through 12-3, and Comparative Examples 12-1 through 12-3 were evaluated by X-ray diffraction (XRD), X-ray photoelectron spectroscopy (XPS), NO oxidation activity measurement, and isopropanol oxidation activity measurement.

1. X-ray diffraction (XRD)

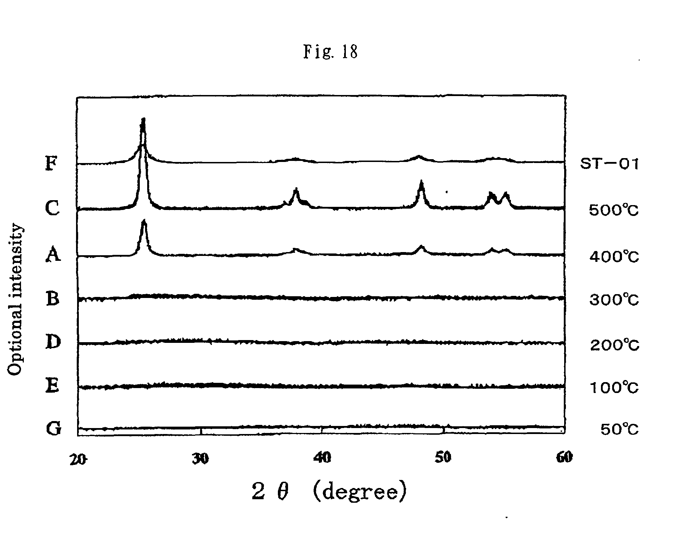

Changes due to the sintering temperatures of sample powder G obtained in Manufacturing Example 1; powders A, B, and C obtained in Embodiments 12-1 through 12-3; and powders D, E, and F obtained in Comparative Examples 12-1 through 12-3 were measured with an X-ray diffraction analyzer (product name: RINT-2000, made by Rigaku Denki K.K.); the results are given in Fig. 18.

As shown in Fig. 18, no diffraction pattern was observed in powders B, D, E and G; and an anatase crystal diffraction pattern was observed in powders A, C, and F. In the comparison of powders A and C, anatase titanium oxide was found to have been produced, enhanced by sintering, and increased in strength.

2. X-ray photoelectron spectroscopy (XPS)

The ratios of titanium to oxygen in sample powder G obtained in Manufacturing Example 1, powder A obtained in Embodiment 12-1, and powder F obtained in Comparative Example 12-3 were measured with an X-ray photoelectron spectral analyzer (ESCA) unit (product name: Quantum 2000, made by Ulvacphi (K.K.))

X-ray photoelectron spectral analysis was conducted under the following conditions.

Excitation X-ray generation conditions: A 110 W electron beam with a beam diameter of 100 μm was directed onto an Al target and the monochromatic X-rays (AlK $\alpha$1) generated were employed as excitation source.

Analysis region, mode: Analysis region: 1500 μm x 100 μm $\varnothing$; beam diameter employed: 100 μm $\varnothing$; extraction angle: 90 degrees.

Pass energy: 187.85 eV (Survey), 23.50 eV (Multiplex)

Step width: 1.6 eV (Survey), 0.1 eV (Multiplex)

The abundance ratio (O/Ti) of elemental oxygen and elemental titanium calculated from the area of the peak attributed to the 2p electron of titanium and the area of the peak attributed to the 1s electron of oxygen obtained based on X-ray photoelectron spectroscopy was 2.45 for sample powder G, 2.28 for powder A, and 2.40 for commercial powder F. Theoretically, the abundance ratio (O/Ti) of the elemental oxygen and elemental titanium of the common (commercial) titanium oxide powder (IV) should have been 2.00. However, in these measurements, the value measured for commercial powder F was 2.40. Thus, the theoretical (actual) elemental oxygen and elemental titanium abundance ratio (O/Ti) of powder A, which was a smaller measured value, was found to be at least smaller than 2.00.

3. Measurement of NO$_x$ Elimination Activity

The NO$_x$ elimination activity of sample powder G obtained in Manufacturing Example 1, powders A, B, and C obtained in Embodiments 12-1 through 12-3, and powders D, E, and F obtained in Comparative Examples 12-1 through 12-3 was measured by the method described in the Test Example above. The results are given in Table 5.

Table 5

| | Elimination concentration (%) of NOx for various measured wavelengths | | | | |
|---|---|---|---|---|---|
| | 360 (nm) | 420 (nm) | 470 (nm) | 520 (nm) | 570 (nm) |
| Manufacturing Example 1 (powder G) | 0 | 0 | 0 | 0 | 0 |
| Embodiment 12-1 (powder A) | 18.2 | 7.5 | 7.2 | 1.9 | 0.7 |
| Embodiment 12-2 (powder B) | 6 | 1.1 | 1.1 | 0.5 | 0.2 |
| Embodiment 12-3 (powder C) | 15.1 | 2.1 | 0.8 | 0.2 | 0.1 |
| Comparative Example 12-1 (powder D) | 0.2 | 0 | 0 | 0 | 0 |
| Comparative Example 12-2 (powder E) | 0.1 | 0 | 0 | 0 | 0 |
| Comparative Example 12-3 (powder F) | 28.4 | 4.5 | 0.4 | 0 | 0 |

4. Measurement of Isopropanol Oxidation Activity

Products obtained by coating 0.2 g of respective sample powder G obtained in Manufacturing Example 1, powders A, B, and C obtained in Embodiments 12-1 through 12-3, and powders D, E, and F obtained in Comparative Examples 12-1 through 12-3 on glass plates (6 x 6 cm) were placed in a glass bell jar reactor (volume: 1.9 L). A 300 W halogen lamp was employed as light source. A cutting filter (product name: IRA-25S, made by Toshiba (K.K.), cutting light 650 nm and above in wavelength) and a cutting filter (product name: L-42, made by Toshiba, cutting light below 420 nm in wavelength) were employed. The interior of the system was first thoroughly evacuated and 2-propanol was introduced into the reaction vessel to a concentration of 500 ppm as the reaction gas. Once the 2-propanol had reached adsorption equilibrium, two hours of light irradiation were conducted. The reaction gas was analyzed by gas chromatography (FID) and the amount of increase (acetone generation rate (ppm/min)) in the acetone concentration generated by oxidation was measured. The results are given in Table 6.

Table 6

| | Acetone generation rate (ppm/min) due to halogen lamp (visible light irradiation) |
|---|---|
| Manufacturing Example 1 (powder G) | 0 |
| Embodiment 12-1 (powder A) | 1.3 |
| Embodiment 12-2 (powder B) | 0.1 |
| Embodiment 12-3 (powder C) | 0.3 |
| Comparative Example 12-1 (powder D) | 0 |
| Comparative Example 12-2 (powder E) | 0 |
| Comparative Example 12-3 (powder F) | 0 |

From Table 6, it will be understood that powder A obtained in Embodiment 12-1 had a high acetone generation rate (ppm/min) and a high acetone generation characteristic (photocatalytic function) in the oxidation of 2-propanol due to visible light irradiation. By contrast, almost no increase in acetone was observed for powders G, E, and F, indicating that they had no photocatalytic function.

4. Measurement by Color Analyzer

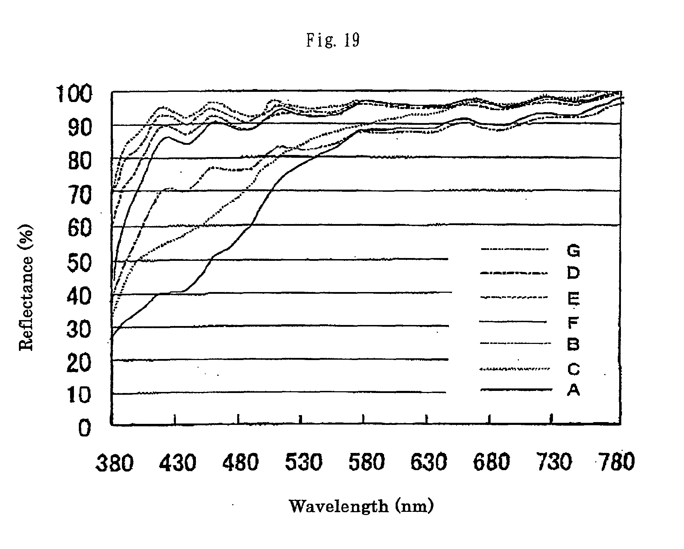

To observe the extent of absorbance of light by sample powder G obtained in Manufacturing Example 1, titanium oxide powders A, B, and C obtained in Embodiments 12-1 through 12-3, and titanium oxide powders D, E, and F obtained in Comparative Examples 12-1 through 12-3, the reflectance of each powder when irradiated with light in the visible range was measured with a color analyzer (Tokyo Denshoku Gijutsu Center Ltd., product name: TC-1800). The results are given in Fig. 19. From Fig. 19, it will be understood that since powders A, C, and B absorb larger amount of visible light and thus develop color, they have visible light activity (photocatalytic function). Further, the reflectance of the each powder (the reflectance when irradiated with light 450 nm in wavelength when the reflectance when irradiated with light 600 nm in wavelength was defined as 1) is given in Table 7.

Table 7

| | Reflectance |
|---|---|
| Manufacturing Example 1 (powder G) | 0.99 |
| Embodiment 12-1 (powder A) | 0.53 |
| Embodiment 12-2 (powder B) | 0.86 |
| Embodiment 12-3 (powder C) | 0.66 |
| Comparative Example 12-1 (powder D) | 0.98 |
| Comparative Example 12-2 (powder E) | 0.96 |
| Comparative Example 12-3 (powder F) | 0.93 |

The ESR spectrum of powder A obtained in Embodiment 12-1 was measured. Measurement was conducted at 77 K in vacuum (0.1 Torr). The measurement conditions were identical to those in Embodiment 1.

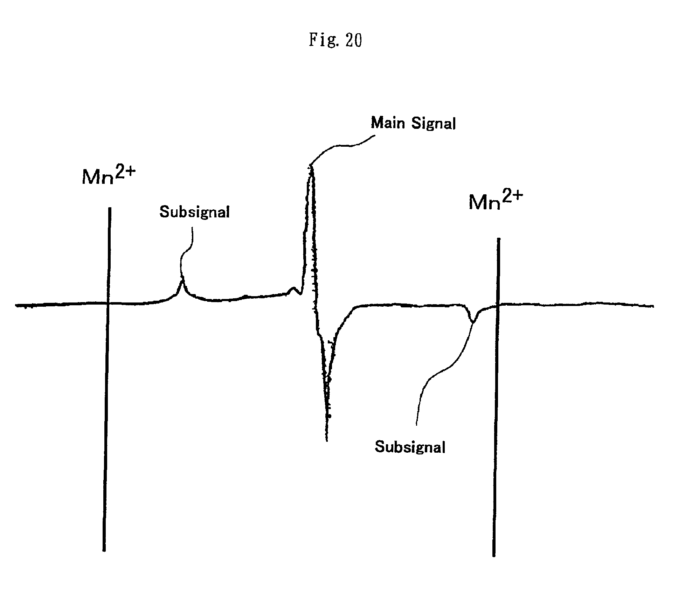

Fig. 20 shows the ESR spectra measured with irradiation with light through a filter (L-42) cutting out light (obtained using a 500 W high-pressure mercury lamp) below 420 nm (measurement temperature of 77 K). Although the ESR spectrum in darkness was also measured, essentially no signal was observed.
In the spectrum shown in Fig. 20, a main signal having a g value ranging from 2.004 to 2.007 and two subsignals having g values ranging from 1.985 to 1.986 and 2.024 were observed.
Neither a main signal having a g value ranging from 2.004 to 2.007 nor the two subsignals having g values ranging from 1.985 to 1.986 and from 1.985 to 2.024 were observed in product obtained by drying white hydrolysis product at 50°C under any of the ESR measurement conditions.

Embodiment 13 (Method of Manufacturing Visible Light Responsive Material from titanium sulfate (2))

A 50 g quantity of 24 percent titanium sulfate solution (Shika first grade, made by Kanto Kagaku) was added to 400 mL of distilled water and stirred with a magnetic stirrer. Concentrated ammonia water (28 percent, Kanto Kagaku, special grade) was added thereto and a neutralization reaction was conducted. Following the neutralization reaction, the mixture was adjusted to pH 7 and stirred for 15 min. Since the stirrer was sometimes no longer able to turn at that time, distilled water was added (200 mL). Fifteen minutes later, after stirring had been stopped, the mixture was left standing for some time and the supernatant was discarded. Filtration was conducted with a nutsche filter and the filtrate was washed with 2 L of ammonia water (5:95). This operation is a method wherein ammonia water was added when the mixture formed cakes on the filter paper. The mixture obtained was then dried for 24 hr at 60° C and sintered for 1 hr at 400°C, yielding the visible light responsive type material of the present invention.

The $NO_x$ elimination activity of the material obtained was measured in the same manner as in the test example above. The results are given in Table 8.

Table 8

| Wavelength (nm) | NO reduction (%) | $NO_2$ generation (%) | NOx elimination (%) |
|---|---|---|---|
| 570 | 1.2 | 0 | 1.2 |
| 520 | 9.8 | 1.2 | 8.6 |
| 470 | 21.5 | 4.3 | 17.2 |
| 420 | 22.2 | 5.5 | 16.6 |
| 360 | 28.5 | 10.3 | 18.2 |

The ESR spectrum of the material obtained was measured. The measurement was conducted in vacuum (0.1 Torr) at 77 K. The measurement conditions were identical to those in Embodiment 1.

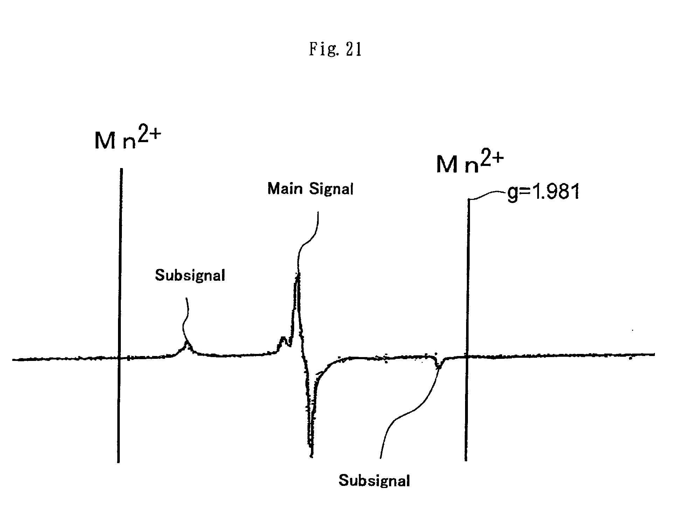

Fig. 21 (measurement temperature of 77 K) gives the ESR spectrum measured with irradiation by light passing through a filter (L-42) cutting out light (obtained using a 500 W high-pressure mercury lamp) below 420 nm.

A main signal having a g value ranging from 2.004-2.007 and two subsignals having g values ranging from 1.985 to 1.986 and 2.024 were observed in the spectrum of Fig. 21.

Neither a main signal having a g value ranging from 2.004-2.007 nor two subsignals having g values ranging from 1.985 to 1.986 and 2.024 were observed under any of the ESR measurement conditions in the product obtained by drying the white hydrolysis product at 50°C.

Embodiment 14 (Method of Manufacturing from Alkoxide)

To 200 g of pure water, 30 g of titanium isopropoxide were gradually added with stirring (with a molar ratio of water to titanium isopropoxide of about 10:1). The solution obtained was stirred for about 30 min and the precipitate (hydrolysis product) was recovered by filtration. The precipitate (hydrolysis product) was then suspended in pure water, stirred for one day, filtered, dried at 110°C, and sintered for 1 hr at 400°C. The white powder obtained was referred to as sample A.

With the exception that the precipitate (hydrolysis product) was suspended in ammonia water (ammonia concentration: 6 percent) and stirred for one day instead of being suspended in pure water and stirred for one day, a yellow powder referred to as sample B was obtained by the same operation as above.

The $NO_x$ elimination activity of samples A and B were measured by the above-described test method. The results are given in Table 9 below.

Table 9

| Sample A | | | |
|---|---|---|---|
| Wavelength (nm) | NO elimination (%) | $NO_2$ generation (%) | NOx elimination (%) |
| 570 | 0 | 0 | 0 |
| 520 | 0.3 | 0 | 0.3 |
| 470 | 1.1 | 0 | 1.1 |

Table 9 (continued)

| Sample A | | | |
|---|---|---|---|
| Wavelength (nm) | NO elimination (%) | NO$_2$ generation (%) | NOx elimination (%) |
| 420 | 1.5 | 0 | 1.5 |
| 360 | 16.0 | 2.5 | 13.5 |
| Sample B | | | |
| Wavelength (nm) | NO elimination (%) | NO$_2$ generation (%) | NOx elimination (%) |
| 570 | 1.0 | 0 | 1.0 |
| 520 | 4.7 | 0 | 4.7 |
| 470 | 15.6 | 3.4 | 12.2 |
| 420 | 16.4 | 4.6 | 11.8 |
| 360 | 19.1 | 100 | 9.1 |

From the results of Table 9, it will be understood that a material comprised of titanium oxide having visible light responsiveness was obtained by heat treating titanium oxide (titanium hydrolysis product) in the presence of ammonia.

The ESR spectra of the materials obtained were measured. The measurement was conducted at 77 K in vacuum (0.1 Torr). The measurement conditions were identical to those in Embodiment 1.

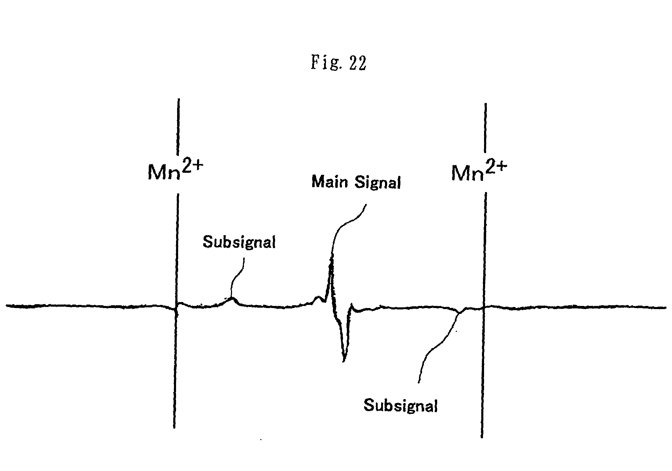

Fig. 22 (measurement temperature 77 K) gives the ESR spectra measured with irradiation by light passing through a filter (L-42) cutting out light (obtained using a 500 W high-pressure mercury lamp) below 420 nm.

A main signal having a g value ranging from 2.004-2.007 and two subsignals having g values ranging from 1.985 to 1.986 and from 1.985 to 2.024 were observed in the spectra of Fig. 22.

Neither a main signal having a g value ranging from 2.004-2.007 nor two subsignals having g values ranging from 1.985 to 1.986 and 2.024 were observed under any of the ESR measurement conditions in the product obtained by drying the white hydrolysis product at 50°C.

Embodiment 15 (Method of Manufacturing from Titanium Sulfate Hydrolysis Product)

A hydrolysis product obtained by replacing the ammonia water in Embodiment 12 with sodium hydroxide solution was suspended in pure water, stirred for one day, filtered, dried at 110°C, and sintered for 1 hr at 400°C. The white powder obtained was referred to as sample C.

With the exception that the precipitate (hydrolysis product) was suspended in ammonia water (ammonia concentration: 6 percent) and stirred for one day instead of suspended in pure water and stirred for one day, a yellow powder referred to as sample D was obtained by the same operation as above.

When the NO$_x$ elimination activity of samples C and D was measured by the above-described test method, in the same manner as samples A and B in Embodiment 14, sample C, which had been obtained by sintering for 1 hr at 400°C without the presence of ammonia, exhibited no visible light responsiveness, while sample D, which had been sintered for 1 hr at 400°C in the presence of ammonia, exhibited visible light responsiveness.

Reference Example

The molar ratio of oxygen to titanium in the titanium oxides in the visible light responsive type materials of the present invention obtained in Embodiments 7, 12-1, and 13 were measured by X-ray photoelectron spectral analyzer (ESCA). Reagent first grade titanium dioxide made by Wako Pure Chemical Industries, Ltd. was employed as a control sample.

The X-ray photoelectron spectroscopy (ESCA) measurement was conducted by the same X-ray photoelectron spectroscopy as in the characteristic evaluation of Embodiment 12.

The results are given in Table 10.

Table 10

| Sample name | O/Ti ratio (ESCA)∗ | O/Ti ratio∗∗ |
| --- | --- | --- |
| Embodiment 7 | 2.11 | 1.76 |
| Embodiment 12-1 | 2.27 | 1.90 |
| Embodiment 13 | 2.17 | 1.82 |
| Reagent titanium dioxide | 2.39 | 2.00 (theoretical value) |

∗ Actual measured value calculated based on peak areas of O (oxygen) and Ti (titanium) in ESCA measurement data.

∗∗ O/Ti atomic ratio of each sample obtained by conversion of the actual measured value of the O/Ti ratio (ESCA) using the theoretical value of 2.00 as the O/Ti atomic ratio of the reagent titanium dioxide.

Industrial Applicability

The visible light responsive type material of the present invention is useful as a photocatalyst, photosensor, photoelectric cell material, photoantistain material, photohydrophilic material, photobactericidal material, and the like.

The present invention provides a novel light responsive material responding even to visible radiation. This material can be further inexpensively manufactured by wet methods. According to the present invention, titanium oxide having visible light responsiveness as a photocatalyst can be readily and inexpensively manufactured employing existing equipment used in wet methods, such as the sulfuric acid method.

**Claims**

1. A visible light responsive type material, **characterized in that** said material is titanium oxide comprising at least anatase type titanium oxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

2. The material according to claim 1, wherein said three signals are also observed in the ESR measured in darkness and under the irradiation of light having a wavelength of 420 nm or more at a normal temperature in vacuum.

3. The material according to claim 1 or 2, wherein said three signals appertain to radicals attributing to hole complement.

4. The material according to claim 1, further comprising a subsignal having a g value ranging from 2.009 to 2.010 in the ESR measured under the irradiation of light having a wavelength of 420 nm or more at 77 K in vacuum.

5. The material according to any of claims 1 to 4, wherein said titanium oxide consists of titanium and oxygen at nonstoichiometric ratio.

6. The material according to any of claims 1 to 5, which is a powder or a film.

7. The material according to any of claims 1 to 6, wherein the reflectance to the light having the wavelength of 450 nm is 0.85 or less, provided that the reflectance to the light having the wavelength of 600 nm is defined as 1.

8. The material according to any of claims 1 to 6, wherein the reflectance to the light having the wavelength of 450 nm is 0.80 or less, provided that the reflectance to the light having the wavelength of 600 nm is defined as 1.

9. The material according to any of claims 1 to 6, wherein the reflectance to the light having the wavelength of 450 nm is 0.70 or less, provided that the reflectance to the light having the wavelength of 600 nm is defined as 1.

10. The material according to any of claims 1 to 9, having the oxidation activity of NO by the light having the wavelength of 520 nm.

11. The material according to any of claims 1 to 9, having the oxidation activity of NO by the light having the wavelength of 570 nm.

12. A manufacturing method of the visible light responding type material according to any of claims 1 to 11, **characterized in that** amorphous or incomplete crystalline titanium oxide and/or titanium hydroxide (referred to as starting material titanium compound) are heated in the presence of ammonia or its derivative, and said heating is stopped at the time when the light absorption at 450 nm of a material produced is larger than the light absorption at 450 nm of the starting material titanium compound.

13. The manufacturing method according to claim 12, wherein said heating is performed at a temperature ranging from 250 to 500 °C and under the normal pressure.

14. The manufacturing method according to 12 or 13, wherein the starting material titanium compound is heated in the ammonia gas atmosphere or in the presence of ammonium salt.

15. The manufacturing method according to any of claims 12 to 14, wherein said heating is performed to the extent that the reflectance of the material produced to the light having the wavelength of 450 nm is 0.85 or less (wherein the reflectance to the light having the wavelength of 600 nm is defined as 1).

16. The manufacturing method according to any of claims 12 to 14, wherein said heating is performed so that the reflectance of the material produced to the light having the wavelength of 450 nm exhibits 0.80 or less (wherein the reflectance to the light having the wavelength of 600 nm is defined as 1).

17. The manufacturing method according to any of claims 12 to 14, wherein said heating is performed so that the reflectance of the material produced to the light having the wavelength of 450 nm exhibits 0.70 or less (wherein the reflectance to the light having the wavelength of 600 nm is defined as 1).

18. The manufacturing method according to any of claims 12 to 17, wherein the starting material titanium compound is obtained by hydrolyzing titanium chloride or titanium sulfate with ammonium hydroxide.

19. The manufacturing method according to claim 18, wherein the hydrolysis is performed by continuously or intermittently adding an ammonium hydroxide aqueous solution to a titanium chloride aqueous solution or a titanium sulfate aqueous solution, or by continuously or intermittently adding titanium chloride aqueous solution or a titanium sulfate aqueous solution to an ammonium hydroxide aqueous solution.

20. The manufacturing method according to claim 18 or 19, wherein the hydrolysis is performed at a temperature ranging from 0 to 100 °C.

21. The manufacturing method according to any of claims 18 to 20, wherein the hydrolyzed substance of titanium chloride or titanium sulfate with ammonium hydroxide is subjected to said heating after washing with water or an ammonium hydroxide aqueous solution.

22. The manufacturing method according to claim 21, wherein the washing of the hydrolyzed substance with water or an ammonium hydroxide is performed by additionally passing water or an ammonium hydroxide aqueous solution through the hydrolyzed substance obtained as a filtrate, or by suspending the filtrate of the hydrolyzed substance in water or an ammonium hydroxide aqueous solution, followed by filtrating the suspension obtained.

23. The manufacturing method according to any of claims 18 to 22, wherein the titanium chloride is titanium trichloride or titanium tetrachloride.

24. The manufacturing method according to any of claims 12 to 17, wherein the starting material titanium compound is obtained by hydrolyzing titanium alkoxide with water.

25. The manufacturing method according to any of claims 12 to 24, wherein the material obtained by heating is washed with water or an aqueous solution.

26. The manufacturing method according to claim 25, wherein the washing of the material obtained by heating with water or an aqueous solution is performed so that the water or aqueous solution separated from the material after washing exhibits a pH ranging from 3.5 to 7, or so that the amount of chlorine ion or sulfate ion contained in the material washed is reduced.

27. A method of sterilizing, preventing algae, preventing mildew, and/or preventing stain, using the material according to any of claims 1 to 11.

28. A method for clarifying water using the material according to any of claims 1 to 11.

29. A method for reducing nitrogen oxides contained in the air using the material according to any of claims 1 to 11.

Fig. 1

Fig. 2

Fig. 3

2 θ /degree

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Activity change by washing

Fig. 17

Wavelength (cm$^{-1}$)

Fig. 18

Fig. 19

Fig. 20

Fig. 21

Fig. 22

Fig. 23

g value

## INTERNATIONAL SEARCH REPORT

| | International application No. |
|---|---|
| | PCT/JP01/00584 |

**A. CLASSIFICATION OF SUBJECT MATTER**
Int.Cl$^7$   C01G 23/04, B01D53/86, C02F1/72

According to International Patent Classification (IPC) or to both national classification and IPC

**B. FIELDS SEARCHED**

Minimum documentation searched (classification system followed by classification symbols)
Int.Cl$^7$   C01G 23/04, B01D53/86, C02F1/72, B01J35/02

Documentation searched other than minimum documentation to the extent that such documents are included in the fields searched

Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| EX | JP, 2001-072419, A (Sumitomo Chemical Company, Limited), 21 March, 2001 (21.03.01), Claims; Par. Nos. [0001], [0018]; working example & EP, 1065169, A   & AU, 200039391, A & CA, 2311980, A | 1-29 |
| EX | JP, 2001-098219, A (Agency of Industrial Science and Technology), 10 April, 2001 (10.04.01), Claims; Par. Nos. [0015] to [0017]; working example (Family: none) | 1-11,27-29 |
| X | US, 5011674, A (Sakai Chemical Industry Co., Ltd.), 30 April, 1991 (30.04.91), Claims; working examples 11 to 28; Table 2 & JP, 01-301518, A (Sakai Chemical Industry Co., Ltd.), 05 December, 1989 (05.12.89), Claims; working examples 11 to 28; Table 2 & US, 5169619, A | 1-26 |
| A | JP, 11-333304, A (Kankyo Device Kenkyusho K.K.), | 1-29 |

☒ Further documents are listed in the continuation of Box C.     ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention. <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 23 April, 2001 (23.04.01) | Date of mailing of the international search report <br> 01 May, 2001 (01.05.01) |
|---|---|
| Name and mailing address of the ISA/ <br> Japanese Patent Office | Authorized officer |
| Facsimile No. | Telephone No. |

Form PCT/ISA/210 (second sheet) (July 1992)

## INTERNATIONAL SEARCH REPORT

| | International application No. |
|---|---|
| | PCT/JP01/00584 |

C (Continuation).  DOCUMENTS CONSIDERED TO BE RELEVANT

| Category* | Citation of document, with indication, where appropriate, of the relevant passages | Relevant to claim No. |
|---|---|---|
| | 07 December, 1999 (07.12.99),<br>Claims; Par. Nos. [0011] to [0012]; working example<br>(Family: none) | |
| A | JP, 9-175821, A (ISHIHARA SANGYO KAISHA, LTD.),<br>08 July, 1997 (08.07.97),<br>Claims; working example   (Family: none) | 1-26 |

Form PCT/ISA/210 (continuation of second sheet) (July 1992)